# EUROPEAN PATENT APPLICATION

(11) **EP 1 115 190 A1**
(43) Date of publication of application: **11.07.2001**
(21) Application number: 99929858.1
(22) Date of filing: 15.07.1999
(51) Int. Cl.: H02K 3/18, H02K 11/00, H02K 21/14, H02K 29/00

(54) **ROTATING ELECTRIC MACHINE**

(71) Applicant: MORIYAMA MANUFACTURING CO., LTD., Shuchi-gun, Shizuoka, 437-0292 (JP)
(72) Inventor: TAKANO, Tadashi Moriyama Manufacturing Co., Ltd., Shuchi-gun Shizuoka 437-0292 (JP)
(74) Representative: Leson, Thomas Johannes Alois, Dipl.-Ing.
(86) International application number: JP9903828
(87) International publication number: WO0106617

(57) **Abstract**

This invention proposes a rotary electric apparatus comprising a rotor having permanent magnets, and a stator constituted with a core provided with coils made by winding a magnet cable, wherein said magnet cable is a stranded cable made by twisting a bundle of enameled wires. The stranded cable makes it possible to wind without quality problems, without becoming bulky, in high density, with easy coiling process, and high productivity. This makes the rotary electric apparatus all the more smaller and lighter.

## Description

### Technical Field

This invention relates to rotary electric apparatuses such as electric motors and electric generators, and in particular to those with coil structure suitable for electric motors such as small-sized, high-output, low-voltage-operated, brushless, dc motors.

### Technical Background

Concerning the electric vehicle (EV) such as the electric motor-operated hybrid bicycle, the electric motor-operated two-wheeled vehicle, and the electric motor-operated wheelchair, while the battery for use is required to work at a relatively low voltage and to have a required minimum capacity for reasons of weight and space, the electric motor using the battery as a power source is required to have a large load-standing capacity in addition to small size, light weight, and high output.

To obtain required output at a lowered battery voltage with the electric motor such as the brush less dc motor for use in EV's, a large amperage of current must be applied to the electric motor. However, to meet the requirement of operating at a low voltage and a large amperage, some contrivance is required in winding the coil on the core (magnetic yoke) of the electric motor.

That is to say, when a current of a low voltage and a large amperage is applied to the coil of the motor, efficiency lowers due to the Joule effect heat caused by the power loss of I²R (= W); with I in amperage, and R in ohmage). If the amperage is determined by a required performance, the point is how to lower the ohmage of the coil.

To reduce the resistance value of the coil, the coil should be wound with a wire of a largest possible cross-sectional area in a shortest possible length. In other words, the coil should be wound with a thickest possible wire in highest possible density. However, a thick wire is high in rigidity and disadvantageous in many respects such as torsion, bend, slip, etc. And, winding with high density is difficult because working space is tight.

Therefore, various ways have been devised so far; in case of a thin-diameter magnet wire, plural wires (with equivalent cross section to that of a thick wire) are wound around a core, or plural turns are wound around a core. In case of a thick magnet wire on the other hand, in one way, the wire is wound in a well-ordered row around each of cores separate in circumferential direction and assembled together, and in another way, the core is divided into a radial core and a ring core, and well-ordered winding is made using a bobbin that is separate from the cores.

However, with the above-described winding structure for the electric motor, various quality problems occur: In case of using plural thin-diameter wires, tensile forces of wires become unequal. When the wires are wound by plural turns and the winding diameter increases, resistance values are different between inside and outside turns. In case a thick wire is used to make windings around plural separate cores, the number of components increases, requiring the control of accuracy of the cores, and moreover, the assembly man-hour after the wire winding process increases.

Then, the last way to follow seems to wind a thick magnet wire directly around the core, which, however, as already stated, ends up in bulky winding, making it difficult to realize a high density winding, and also raises a problem that the work of winding the wire around the core is difficult and so the productivity becomes low.

This invention is made to solve the above problems, specifically to make it possible to wind a magnet wire of a large conductor cross-sectional area with a high density, without becoming bulky, withoutqualityproblems, with easy winding work, and with high productivity for rotary electric apparatuses, even when their sizes are relatively small.

### Disclosure of the Invention

The claim 1 of the invention specifies a rotary electric apparatus comprising a rotor having a permanent magnet, and a stator with magnet wires wound around stator cores, characterized in that plural enameled wires are twisted together to form a stranded cable which is used as said magnet wires.

The invention of claim 1 makes it possible to wind the magnet wires having a large conductor cross-sectional area with a high density, without becoming bulky, without quality problems, with easy winding work, and with high productivity, so that rotary electric apparatuses are made in smaller size and lighter weight.

The claim 2 of the invention specifies a rotary electric apparatus as recited in claim 1, characterized in that; the rotor and the stator are placed within a casing, the rotor is shaft-supported for rotation with the casing, the stator is fixed to the casing, and an encoder for acquiring control signals is provided on the outside of the casing.

The invention of claim 2 makes it possible to facilitate maintenance work of the encoder because it is provided on the outside of the casing and can be serviced from outside.

The claim 3 of the invention specifies a rotary electric apparatus as recited in claim 1, characterized in that; the rotor and the stator are placed within a casing, the rotor is shaft-supported for rotation with the casing, the stator is fixed to the casing, and an encoder for acquiring control signals is provided on the inside of the casing.

The invention of claim 3 makes it possible to protect the encoder against being hit with other objects and being wetted with water or rain because the encoder is located inside the casing. Therefore, even if the apparatus is used in electric motor-operated hybrid bicycles, electric motor-operated two-wheeled vehicles, or electric wheelchairs, the encoder is prevented from being wetted with water or rain.

The claim 4 of the invention specifies a rotary electric apparatus as recited in claim 1, characterized in that the outlet wires are constituted with the stranded wires.

The invention of claim 4 makes it unnecessary to use outlet wires in addition to the motor winding because the outlet wires are constituted by utilizing the stranded wires having a large cross·sectional area, a small resistance, and a high flexibility suitable for the outlet wires, thereby reducing the number of components and improving assembly work efficiency.

### Brief Description of Drawings

FIG. 1 is a sectional side view of a first embodiment of the electric motor to which the coil structure of the rotary electric apparatus of this invention is applied.

FIG. 2 is a front view as seen in the direction of the arrow A in FIG. 1, showing the rotor of the electric motor shown in FIG. 1.

FIG. 3 is a front view as seen in the direction of the arrow A in FIG. 1. showing the stator of the electric motor shown in FIG. 1.

FIG. 4 is a front view showing the extent of winding a single magnet wire of the stator shown in FIG. 3.

FIG. 5 shows the section B-B of FIG. 4, showing the core portion of the stator shown in FIG. 4.

FIG. 6 shows components of the core shown in FIG. 5; (A) is a side view showing a plate which covers one end surface of the core, (B) is a front view showing the shape of one of laminated iron sheets constituting the magnetic yoke of the core, and (C) is a side view showing a plate which covers the other end surface of the core.

FIG. 7 shows a cross section of a magnet cable (stranded cable) as an embodiment of the coil structure.

FIG. 8 is a sectional side view of a second embodiment of the electric motor to which the coil structure of the rotary electric apparatus of this invention is applied.

FIG. 9 is a front view of the electric motor as seen in the direction of the arrow C in FIG. 8.

FIG. 10 is a cross-sectional side view of the electric motor shown in FIG. 8.

FIG. 11 shows the section D-D of FIG. 10.

FIG. 12 shows the section E-E of FIG. 10.

FIG. 13 shows how the rotator and the stator of the electric motor and the outlet wires are constituted.

FIG. 14 is a front view of the outlet wire terminals.

### Best Forms of Embodying the Invention

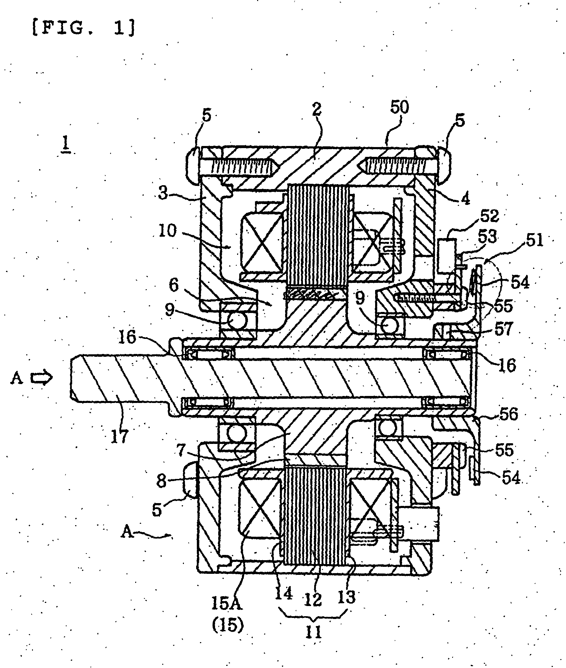

A first form of embodying the invention is described below in reference to FIGs. 1 to 7.

FIG. 1 shows an example of the electric motor to which the coil structure of this invention is applied. The electric motor 1, the rotary electric apparatus, well-known in related art, is specifically a small-sized, brushless, three-phase ac motor for use in EV's (electric vehicles) such as electric hybrid bicycles, and comprises a rotor 6 having a permanent magnet 8, and a stator 10 having a magnet cable 15 wound as coils 15A around cores 11.

In other words, a casing 50 of the electric motor 1 is made up of a cylindrical case main part 2, and lid plates 3 and 4 joined to the case main part 2 using bolts 5. The casing 50 supports the rotor 6 for rotation through two ball bearings 9, with permanent magnets 8 provided in the peripheral portion of the yoke 7 of the rotor 6. The core 11 of the stator 10 is made up of an iron sheet laminate body (electromagnetic yoke) 12 and plastic plates 13, 14. Coils 15A are formed by winding a magnet cable 15 around the core 11 of the stator 10. The stator 10 is secured to the casing 50 so as to surround the rotor 6. An output shaft 17 is connected through a roller clutch 16 to the rotor 6.

An encoder 51 for acquiring control signals is provided on the outside of the casing 50. The encoder 51 comprises a circuit board 53 having a circuit including a Hall IC (alternate field type of magnetic resistor element) 52, and a sensor magnet 54. The circuit board 53 is secured with bolts 55 on the outside of the lid plate 4, with the Hall IC located to oppose the sensor magnet 54. The sensor magnet 54 is secured to a rotary disk 56 which in turn is secured to an end portion of the yoke 7 by means of a securing pin 57. The rotary disk 56 rotates together with the yoke 7.

As the rotary disk 56 rotates, the sensor magnet 54 is displaced to change Hall voltage of the Hall IC 52. Control signals for the electric motor 1 is acquired by detecting the revolution speed, rotary position, or rotating direction based on detection of the change in the Hall voltage.

As the encoder 51 is provided on the outside of the casing 50, maintenance of the encoder is made easily from outside, with improved work efficiency.

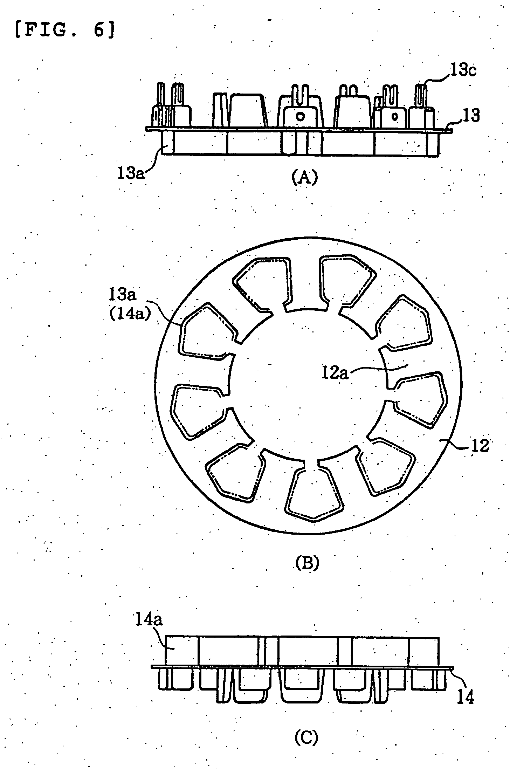

The core 11 of the stator 10 is constituted that; the iron sheet laminate body 12 is formed by laminating plural iron sheets of the shape shown in FIG. 6(B), and plastic plates 13 and 14 of the shapes shown in FIGs. 6(A) and 6(C) are fitted to both end faces of the iron sheet laminate body 12 to form a single body. To put it more in detail, fitting portions of the plates 13 and 14 are fitted into openings among the tooth portions 12a of the iron sheet laminate body 12. As a result, plural (nine) projecting portions 11a are formed on the inner side of the core 11 to extend radially inward toward the center of the core 11, with the tooth portions 12a of the iron sheet laminate body 12 surrounded with the plates 13 and 14.

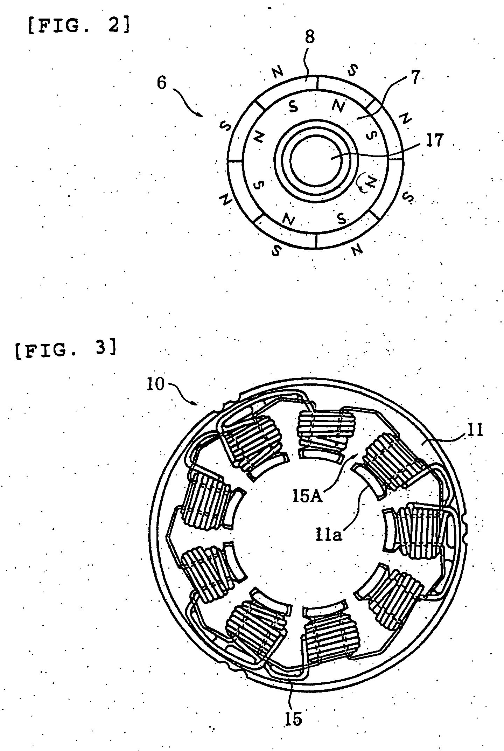

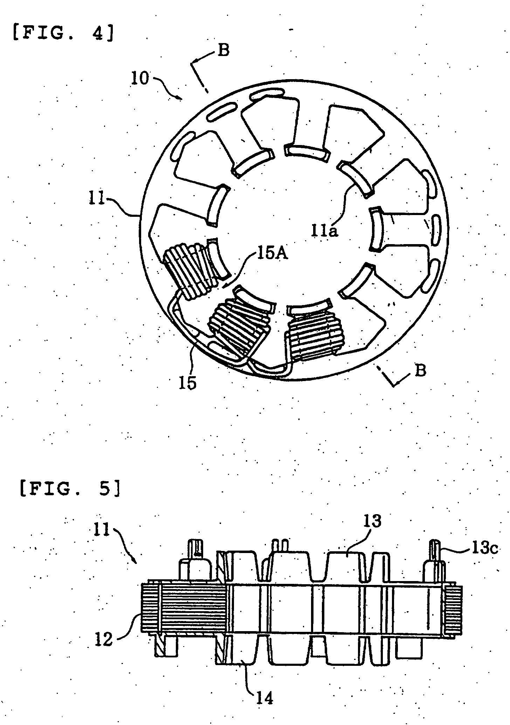

In the rotor 6, plural permanent magnets 8 are disposed in the circumferential direction as shown in FIG. 2 with the N-poles and the S-poles appearing alternately in the radial direction. on the other hand, coils 15A are disposed on the stator 10 as shown in FIG. 3, with each coil formed by winding a magnet cable 15 around each projecting portion 11a of the core 11 formed to surround the permanent magnets 8 of the rotor 6. To form a rotating magnetic field with three-phase alternating current, the magnet cable 15 is wound as shown in FIG. 4 around a group of three projecting portions lla, with one coil around each projecting portion 11a, and with the group being arranged at 120 degree intervals about the center of the core 11.

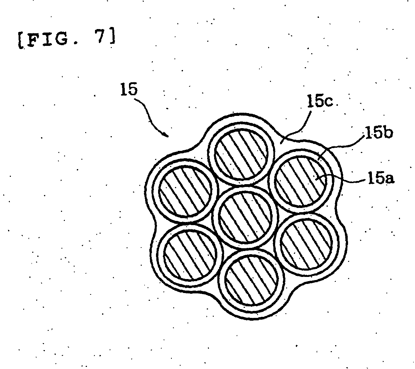

In the coil structure of this embodiment applied to the electric motor 1. the magnet cable 15 for forming the coils 15A is a stranded cable as shown in FIG. 7 made up of plural small-diameter enameled wires generally in conventional use in high frequency coils, high frequency transformers, and high resolution deflection yokes for televisions, and effective in restricting temperature rise in high frequency ranges in comparison with a single thick-diameter enameled wire.

In this embodiment, the material for the insulation coat 15b baked onto the surface of the conductor 15a of each of the enameled wires, the sliver wires of the stranded cable, has the property that is securely baked to solidify but easy to melt (such as denatured ester imide), which provides good workability in soldering. Such a stranded cable, either each single wire or entire cable, is provided with a melt coat 15c of such a material as thermoplastic or thermosetting plastic, so that the coil 15A is made like a single body by heat-melting the melt-coat after the coiling process.

With the coil structure for the electric motor 1 of the above-described embodiment, since the stranded cable of good pliability is used as the magnet cable 15 of the coil 15A, ease of coiling process is remarkably better than that using a single wire of the same conductor cross-sectional area, various problems as described before encountered when using a thick-diameter wire for applying current of a low voltage and great amperage are removed. Further, since the cable is pliable, service life of the coiling machine and the coiling nozzle are considerably extended. On the electric motor side, improvement effect is realized not only in quality and man-hours but also in size and weight.

Incidentally in the electric motor 1, the stranded cable that is twisted while applying a specified tensile force is used, in view of the fact that the coils are wound in both normal and reverse directions, so that the twist of the stranded cable does not become loose and that the tightness of the coil does not vary unevenly.

For the brush less dc motor, control is generally made using pulse width modulation, with its carrier wave frequency reaching sometimes as high as several tens of kHz. Therefore, it is preferable to use the stranded cable which is capable of offsetting noises and has good high frequency characteristic, in contrast to using a single thick-diameter wire or a bundle of thin-diameter wires.

The brush less dc motor for electric power unit required to operate at low voltage and large amperage is required to have a large load-standing capacity (or a wide range of permissible high load operation range). Therefore, the magnet cable for the coils is required to be heat-resistant on one hand. On the other hand, the magnet cable is required to have a property of being easily soldered because the coil ends must be soldered to predetermined positions (in this embodiment, to terminals 13c studded integrally into the plastic plate 13).

Therefore, with the conventional single magnet wire, the insulation coat is firmly bake-applied to the wire to enhance heat resistance. In the soldering process, the insulation coat must be removed by mechanical peeling method in the manufacturing site to improve the ease of soldering. Such a removal work is very cumbersome (while there is a melt-removal method using strong alkali, such a method is not preferable in recent years from the environment protection viewpoint).

In contrast to the above, if the insulation coat layer 15b is made of a material that is baked to adhere firmly but is easy to melt, as in this embodiment, the stranded cable can be soldered easily. That is, the soldering work can be done while melting the insulation coatlayer 15b. which saves the work of coil cable end processing, namely the removal of the insulation coat layer 15b, made before the soldering work, can be omitted.

In comparison with the single wire, since the stranded cable is more effective in restricting the temperature rise in the high frequency range, necessity of using the insulation coat layer of high heat resistance is not very great and so the insulation coat layer may be less thick. As a result, the insulation coat layer can be melted with less heat capacity for soldering, and so the soldering work is further facilitated.

Generally, the wire coils of rotary electric apparatuses are conventionally impregnated with varnish after the coiling work process; to improve electric insulation property, prevent noise and reinforce the apparatus by mechanical fixation, restrict or prevent temperature rise in the apparatuses by improving thermal conductance, improve heat resistance by preventing oxidation, improve moisture resistance, improve commodity value with improved appearance, etc.

In contrast to the above, in this embodiment, the stranded cable used as the magnet cable 15, either each single wire or entire cable, is provided with the melt coat 15c of such a material. as thermoplastic or thermosetting plastic material, so that the coil 15A is made like a single body by simply heat-melting the melt-coat after the coiling process. This process, in contrast to the impregnation with varnish described above, makes it possible to reduce man-hours in the manufacture of the apparatus and to cause the molten layer securely to infiltrate into the coil 15A.

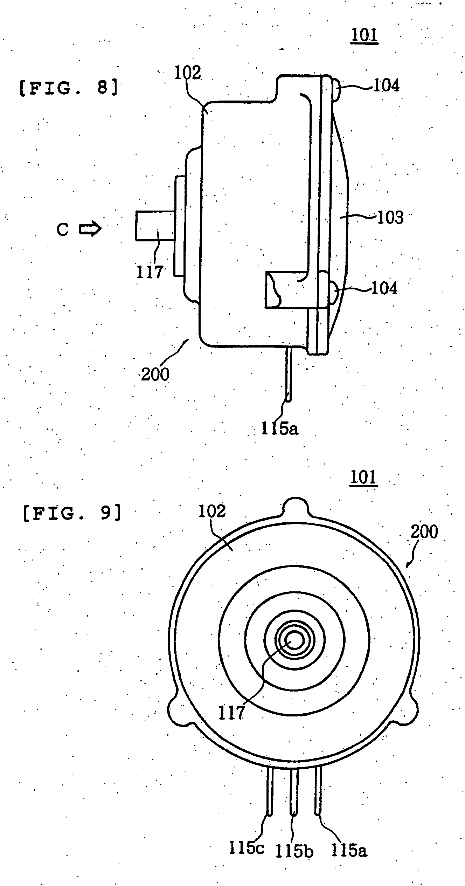

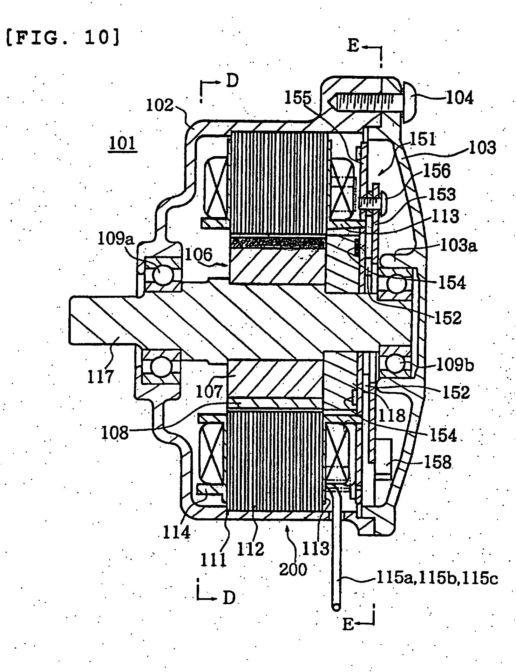

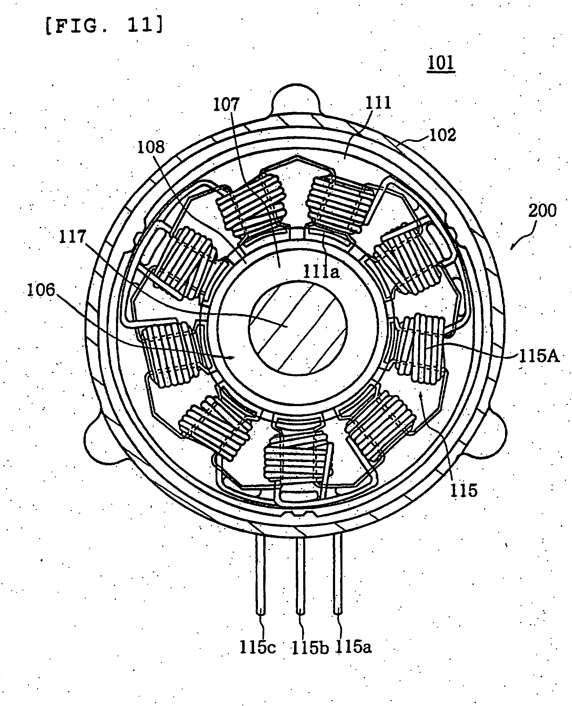

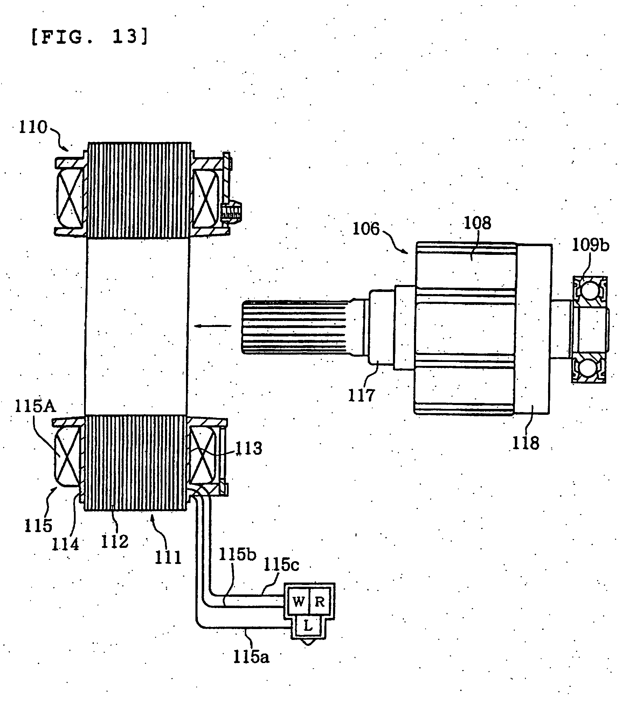

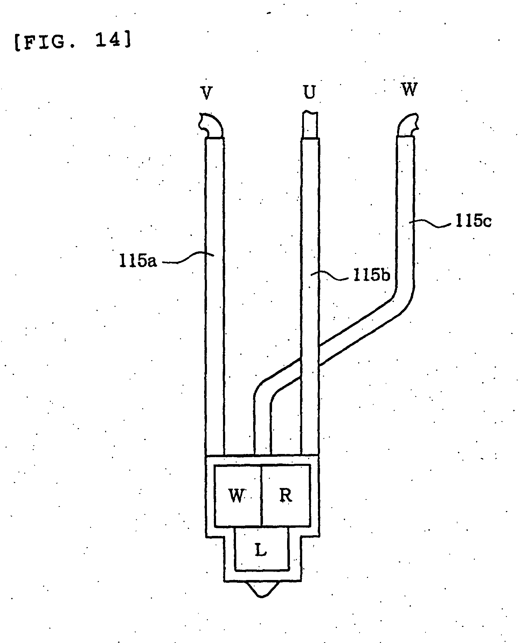

Another embodiment of the rotary electric apparatus of this invention is described below in reference to FIGs. 8 to 14.

An electric motor 101 of this embodiment comprises a casing 200 constituted with a bottomed cylindrical case main part 102 and a lid plate 103 joined with bolts 104 to the case main part 102. Inside the casing 200 is disposed a rotor 106, with permanent magnets 108 disposed along the outer circumferential part of a yoke 107. An output shaft 117 of the electric motor 101 is connected to the rotor 106. The output shaft 117 is provided with a spacer 118. One end of the output shaft 117 is shaft-supported through a ball bearing 109a on the case main part 102, while the other end is shaft-supported through a ball bearing 109b in the recess 103a of the lid plate 103 and further supported with the casing 200 for free rotation.

A stator 110 comprises a core 111 made up of an iron sheet laminate body (electromagnetic yoke) 112 and plastic plates 113 and 114. The core 111 is provided with coils 15A wind-formed with a magnet cable 115. The stator 110 is secured to the case main part 102, so as to surround the rotor 106.

An encoder 151 for acquiring control signals is provided on the outside of the casing 200. The encoder 151 comprises a circuit board 153 having a circuit 153a including a Hall IC (alternate field type of magnetic resistor element) 152, and a sensor magnet 154. The circuit board 153 is secured with bolts 156 to a support plate 155, which in turn is glued to a plate 113 using adhesive or a hot melt method.

The Hall IC 152 is located to oppose the sensor magnet 154. The sensor magnet 154 is secured to the spacer 118 and they rotate together with the output shaft 117.

As the output shaft 117 rotates, the sensor magnet 154 is displaced to change Hall voltage of the Hall IC 152. Control signals for the electric motor is acquired by detecting the revolution speed, rotary position, or rotating direction based on detection of the change in the Hall voltage. The control signals are sent through an outlet terminal 158 and a lead 159 to a controller (not shown).

The sealed constitution in which the encoder 151 is disposed within the casing 200 prevents the encoder 151 from coming into contact with other objects. When the electric motor is used in electric motor-operated hybrid bicycles, motor-operated two-wheeled vehicles, or motor-operated wheelchairs, the encoder 151 is prevented from being wetted with water or rain.

The core 111 of the stator 110 is constituted in the same manner as in the first embodiment. In the rotor 106, plural permanent magnets 108 are disposed in the circumferential direction with the N-poles and the S-poles appearing alternately in the radial direction. In the stator 110, coils 15A, each formed by winding a magnet cable 15 around each projecting portion 111a of the core 111 formed to surround the permanent magnets 108 of the rotor 106. To form a rotating magnetic field with a three-phase alternating current, the magnet cable 115 is wound around a group of three projecting portions 111a, with one coil around each projecting portion 111a, and with the group being arranged at 120 degree intervals about the center of the core 111.

According to the coil structure of this embodiment applied to the electric motor 101, the magnet cable 115 for use to form the coil 115A is made in the same manner as that in the embodiment shown in FIGS. 1 to 7; the magnet cable is made with a bundle of plural enameled wires twisted together, so the explanation is omitted.

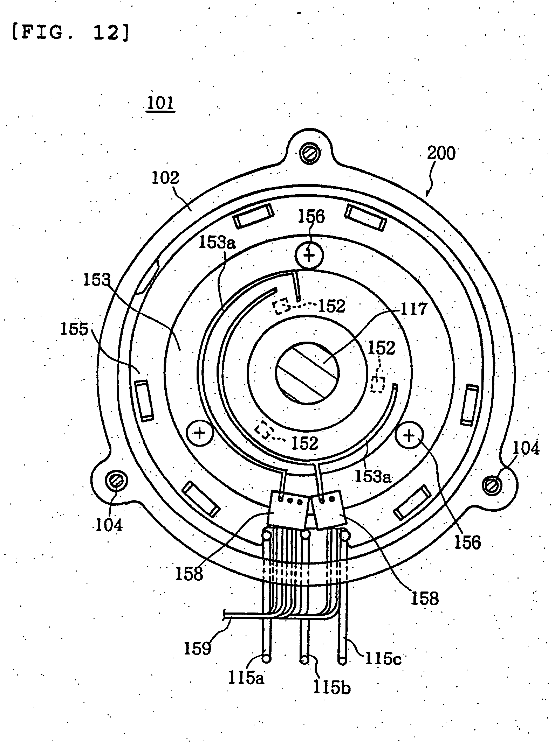

In this embodiment, as shown in FIGs. 12 to 14, outlet leads 115a, 115b, and 115c are made by utilizing the slivers of the magnet cable 115, and connection terminals W, R, and L of the outlet leads 115a, 115b, and 115c are connected to power lines U, V, and W. The stranded cable has a large conductor cross-sectional area, and high flexibility, to make it possible in this embodiment to disuse additional outlet leads separate from the coil cable, to reduce cost and the number of components, and to improve ease of assembly.

While the invention is described above by way of embodiments of the electric rotary apparatus, the object of the application of the invention is not limited to the above-explained embodiments but may also be applied to electric generators, as a matter of course.

### Industrial Feasibility

As described above, a magnet cable of a large conductor cross-sectional area can be wound into coils without problems, without becoming bulky, and with a high density, in rotary electric apparatuses such as electric motors, even if they are relatively small in size, also with easy winding process and with high productivity.

## Claims

1. A rotary electric apparatus comprising a rotor having a permanent magnet, and a stator with magnet wires wound around stator cores, characterized in that plural enameled wires are twisted together to form a stranded cable which is used as said magnet wires.

2. A rotary electric apparatus as recited in claim 1, characterized in that; the rotor and the stator are placed within a casing, the rotor is shaft-supported for rotation with the casing, the stator is fixed to the casing, and an encoder for acquiring control signals is provided on the outside of the casing.

3. A rotary electric apparatus as recited in claim 1, characterized in that; the rotor and the stator are placed within a casing, the rotor is shaft-supported for rotation with the casing, the stator is fixed to the casing, and an encoder for acquiring control signals is provided on the inside of the casing

4. A rotary electric apparatus as recited in claim 1, characterized in that the outlet wires are constituted with the stranded wires.
